Europäisches Patentamt

European Patent Office

Office européen des brevets

(1) Publication number: **0 151 097**
**B1**

# (12) EUROPEAN PATENT SPECIFICATION

(45) Date of publication of patent specification: **20.09.89**

(51) Int. Cl.⁴: **D 21 C 11/00**

(21) Application number: **85850014.3**

(22) Date of filing: **14.01.85**

(54) **A method for removing resin from a paper pulp process liquor.**

(30) Priority: **16.01.84 SE 8400188**

(43) Date of publication of application:
**07.08.85 Bulletin 85/32**

(45) Publication of the grant of the patent:
**20.09.89 Bulletin 89/38**

(84) Designated Contracting States:
**AT DE FR GB IT SE**

(56) References cited:
FI-C- 24 400
FR-A-2 444 645
SE-B- 391 955

Patent Abstract of Japan, absreact of JP 55-56 885

Patent Abstracts of Japan, abstract of JP 56-24 089

DERWENT'S ABSTRACT NO 13415 A/07 SU-245 671

(73) Proprietor: **Boliden Aktiebolag**
**Box 5508**
**S-114 85 Stockholm (SE)**

(72) Inventor: **Engström, Bengt Thomas**
**Fjärre gard 744**
**S-260 30 Vallakra (SE)**

(74) Representative: **Inger, Lars Ulf Bosson**
**L + U INGER Patentbyra AB Garvaregatan 12**
**S-262 00 Ängelholm (SE)**

Courier Press, Leamington Spa, England.

## Description

### Technical field

The present invention relates to a method for removing resin from a paper pulp process liquor.

The object of the present invention is to provide a method of enabling resin to be removed effectively from the resin-contaminated liquors (aqueous liquors) in paper-pulp manufacturing processes, such as to enable, the quality of the pulp produced to be improved, the energy content of the waste resin to be recovered; emission levels to be reduced, both qualitatively and quantitatively; chip-storage quantities to be reduced; a reduction in the amount of auxiliary material erquired (e.g. bleaching agent); a reduction in the extent to which resin need to oxidized upon maturing of the pulp; and a reduction in the amount of water required. By reduction in chip-storage is mainly meant a reduction in storage time due to the fact that no attention needs to be paid to the ingoing resin qualities.

### Background art

The paper pulp and waste liquor produced in wood pulping processes contains large quantities of resins deriving from the wood used. These resins must be removed prior to bleaching the pulp, since otherwise they will discolour the pulp. In general practice, these resins are kneaded from the pulp together with waste liquor, in a pulper located upstream of the bleaching department. The resins may also be precipitated from the pulp suspension in colloidal form, by lowering the pH of the suspension. Such colloids are difficult to isolate, however. The removal of resins by flocculation with the aid of polyelectrolytes has also been proposed. This method has also proven to be unsatisfactory and uneconomic, however.

In SE—B—391955 a method of cleansing waste water with regard to the content of lignin-containing impurities is disclosed, whereby aluminium sulphate is added to obtain a pH of 3.5—4.5 and to co-flocculate the lignin with the aluminium hydroxide flocs formed.

In FR—A—2 444 645 flocculants like aluminium sulphate and strong acids are used for removing terpenes from waste water.

### Disclosure of the invention

It has now surprisingly been found possible to deresinate resin-contaminated liquors in a rational and effective manner by means of a method according to the invention, which provides by resinating the waste liquor a resin concentrate which can be subsequently used as fuel and therewith provide energy; which drastically reduces the amount of fresh water and bleaching material required; which shortens the time taken for raw pulp to mature; and which minimizes the load on the recipient. The invention is characterized by the steps of adding to the liquor:

a) a floc-forming metal salt in an amount at least equal to the stoichiometric amount of resin to precipitate and flocculate the resins and

b) an alkali or an acid to obtain a pH of 5—6; dewatering the resulting suspension;

adding a strong inorganic cleaving acid to obtain a pH or 2 or below;

cleaving at a temperature of at least 70°C to obtain resin and dissolved metal salt;

separating the resin from the solution containing the metal salt.

By floc-forming metal salts is meant here and in the following essentially trivalent metal salts capable of forming metalhydroxide flocs in water. Such salts substantially comprise aluminium sulphate, aluminium chloride, aluminium nitrate, iron (III) chloride, iron (III) sulphate, iron (III) chloride sulphate, or basic polynucleate complexes of aluminium hydroxide or iron hydroxide with preferably sulphate anions.

The present invention will now be described in more detail with reference to an applicable working example and to the accompanying drawings, in which:

Figure 1 is a flow sheet illustrating schematically a sulphite mill incorporating a deresination system;

Figure 2 is a flow sheet illustrating schematically an existing deresination system; and

Figure 3 is a flow sheet illustrating schematically a deresination process according to the invention.

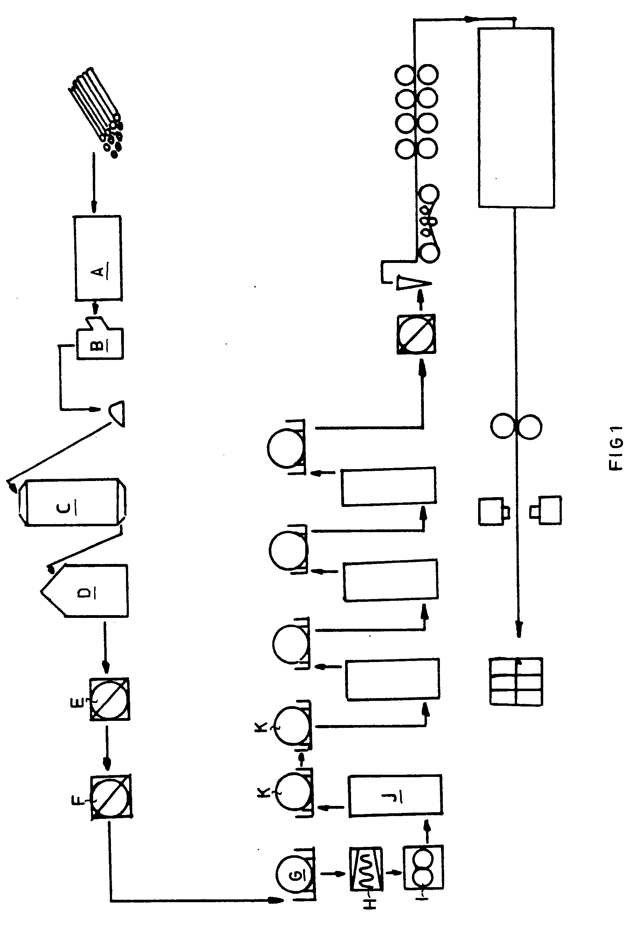

Figure 1 is a schematic illustration of a sulphite plant. Pulp wood is debarked in a barking drum A, chipped in a chipper B and the chips transferred to a digester C, in which the chips are treated with cooking liquor. The resultant pulp is washed, together with cooking liquor, in a washer D, whereafter the cooking liquor is evaporated off and reconditioned, and the pulp is screened in a bull screen E and a fine screen F. The pulp is normally then treated in a deresination stage incorporating a filter G, and is then dewatered in a press H, whereafter the pulp is passed to a frotapulper I to which alkali is supplied for freeing the fibres of the pulp therein. The pulp is then transferred to a tower J, in which the pulp is alkalized terminally, to a pH of about 11, whereupon any resins present are saponified. The pulp is then passed to two wash filters K, where the pulp is washed in counter-flow with fresh water, and the resultant resin-contaminated washing liquor is passed to the recovery system of the plant.

The pulp is then passed to a bleaching department in which the pulp is bleached in several stages, with chlorine, chlorine dioxide, hypochlorite or oxygen. Subsequent to being bleached, the pulp is again screened and then transferred to and dried on a dryer, before being cut and baled.

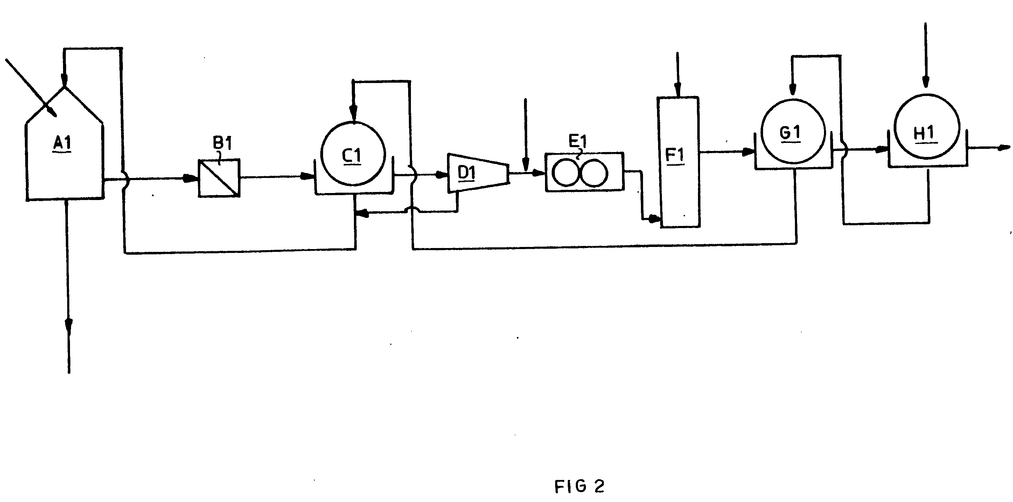

Figure 2 illustrates in more detail a deresination system with subsequent bleaching department according to Figure 1, in which pulp arriving from a digester is introduced into a diffuser A1 in which the pulp, which has a low pH, meets washing liquid deriving from a subsequent stage. The liquid exiting from the diffuser A1 has a pH=2.2 and is evaporated, while the pulp is passed through a screen B1 to a wash filter C1, where the pulp is washed with washing liquor from a subsequent washing stage. The pH in this first washing stage is 6.5 and the temperature 45°C. The pulp is then transferred to a centrifuge D1 (Suder), in which liquid is eliminated, this liquid being passed to the diffusers. Subsequent to being centrifuged, the pulp is supplied with sodium hydroxide and treated in a frotapulper E1. The pulp is then passed to a tower F1, in which the pulp is again treated with sodium hydroxide to pH 10, whereupon resins dissolve and are washed out in a subsequent, second washing stage on a filter G1, using herefor a washing liquid of pH 8 obtained from a subsequent third washing stage. The washing liquid from the second washing stage is transferred to the first washing stage, in accordance with the above. Subsequent to passing through the second washing stage, the pulp is treated in a third washing stage on a filter H1, on which it is washed with incoming fresh water. The resins are separated from the pulp in the washing stages as a result of the high pH levels prevailing therein. A large part of the resins, however, re-precipitate in the diffuser, due to the low pH levels therein. This resin content is taken up by the pulp downstream of the frota-pulper, in quantities of from 4 to 8 g/l; resin deposits on the apparatus used and discolouring resin-flocs in the pulp can be readily observed at resin concentrations as low as 6 g/l.

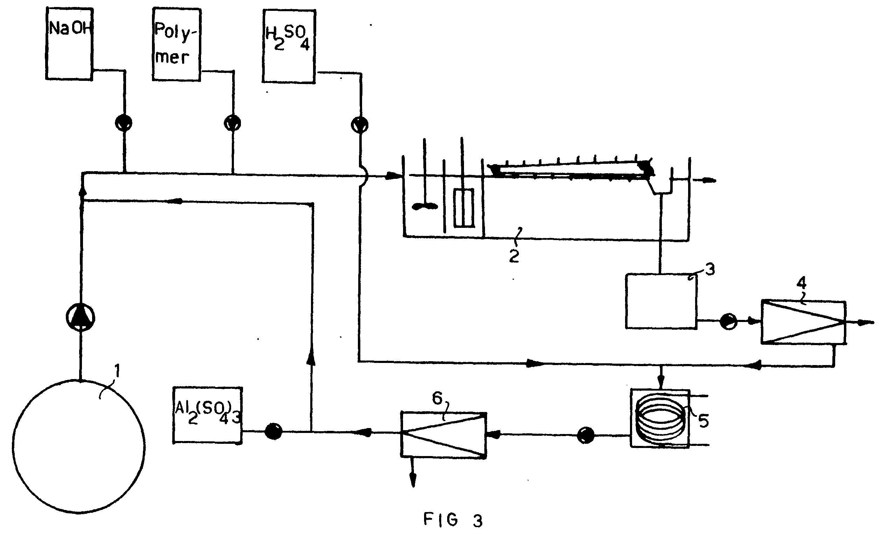

Figure 3 illustrates a process according to the invention. In this process, resin containing water obtained from a pulp-washing stage is fed to an inlet tank 1. The pulp is then transferred to the flotation tank 2. During its passage to the tank 2, the pulp is supplied with $Al_2(SO_4)_3$ and an alkali to pH 5—6 (normally NaOH) and an auxiliary flocculating agent in the form of an organic polyelectrolyte, such as a photoelectrolyte of the polyacrylamide and/or polyethylene-oxide type. Flocs comprising aluminium hydroxide and auxiliary flocculating agent are formed in the floatation tank and bind thereto resins present in the pulp. The flocs are floated-off, whereupon there is obtained firstly clean water, which can be used for washing pulp, and secondly slime, having a dry solids content of about 10%, this slime being transferred to a slime tank 3 and from there to thickening centrifuge 4, in which there is obtained a filtrate and a slime having a dry solids content of about 25%. This slime is transferred to a cleaving reactor 5, in which the pH is lowered to 2 or below, by adding sulphuric acid, and the temperature is raised to 70°C. The resultant flocs are therewith cleaved into a resin product and an aluminium-sulphate product. These cleaved products are then transferred to a cleaving centrifuge, in which a resin concentrate and an aluminium-sulphate solution are obtained, this solution being returned to the flow of water from the inlet tank.

An experiment carried out with sulphite pulp, which contained 16.6 kg resin per ton of pulp and from which 80% of the resin originally present had been removed, gave the following data: the ingoing washing liquid, volume 8.3 m³, contained 130 g Al and 16.6 kg resin. To this volume there was added aluminium sulphate in an amount corresponding to 900 g Al, 4—6 kg NaOH and polymer 28 g. The resultant pH was 5.0—5.5. The subsequent flotation resulted in 7.8 m³ of clean water containing 40 g Al and 3.4 kg resin. The slime phase, volume 0.5 m³ having a dry solids content of 10%, contained 990 g Al and 13.2 kg resin. When thickening the slime in the thickening centrifuge there was obtained 0.3 m³ of filtrate containing 1.0 g Al and 0.1 kg resin. The thickened slime phase, volume 0.2 m³ having a dry solids content of 25%, contained 989 g Al and 13.1 kg resin. Less than 4 kg $H_2SO_4$ were charged to the cleaving reactor, to lower the pH to 2 or below. Treatment in the cleaving centrifuge resulted in a resin concentrate of volume 0.07 m³ having an organic dry solids content of 90%, this solids content comprising 13 kg resin and 382 g Al. The $Al_2(SO_4)_3$ solution, volume 0.13 m³, obtained in the cleaving centrifuge contained 607 g Al and 0.1 kg resin. Prior to being introduced into the washing liquid downstream of the inlet tank, the aluminium sulphate solution was supplemented with 3.2 kg BOLIDEN® ALG (293 g Al), there being obtained an aluminium input of 900 grams.

The resin concentrate obtained can be burned as fuel, to recover its energy content, or returned to the pine-oil cooker, and there further refined.

As described above, the aluminium sulphate from the cleaving centrifuge can either be recycled or used as a paper size, in the case of an integrated paper mill, or used to produce clean water, or to clean other water in or adjacent a paper pulp mill.

## Claims

1. A method for removing resin from a paper pulp process liquor, comprising adding to the liquor:
   a) a floc-forming metal salt in an amount at least equal to the stoichiometric amount of resin to precipitate and flocculate the resins and
   b) an alkali or an acid to obtain a pH of 5—6;
   dewatering the resulting suspension;
   adding a strong inorganic cleaving acid to obtain a pH of 2 or below;
   cleaving at a temperature of at least 70°C to obtain resin and dissolved metal salt;
   separating the resin from the solution containing the metal salt.

2. A method according to claim 1, characterized in that an auxiliary flocculating agent in the form of organic polyelectrolyte is also added.

3. A method according to claim 2, characterized by adding the auxiliary flocculating agent subsequent to adding a) metal salt solution and b) an alkali or acid, in that order.

4. A method according to claim 1, characterized by concentrating the flocculated resin from a dry solids content of 5—10% to at least 25%, by dewatering the flocs in a thickening centrifuge.

5. A method according to claim 1, characterized in that respective cleavage products are each isolated per se in a cleaving centrifuge to a dry solids content of 85% with respect to the cleaved resin product, the separation between respective cleaved products being effected so that at least 50% of the ingoing Me is found in the isolated solution containing the cleaved metal salts.

6. A method according to claims 1—5, characterized in that the floc-forming metal salt used is aluminium sulphate, and in that the cleaving acid is sulphuric acid.

7. A method according to claims 1—5, characterized in that the floc-forming metal salt is an iron salt, such as ferri chloride, ferri sulphate, ferri chloride sulphate and in that the cleaving acid is sulphuric acid and/or hydrochloric acid.

8. A method according to claims 1—5, characterized in that the floc-forming metal salt is aluminium chloride, and in that the cleaving acid is hydrochloric acid.

**Patentansprüche**

1. Verfahren zur Entfernung von Harz aus einer Papierfaserstoff-Prozeßlauge, indem man zu der Lauge

a) ein flockenbildendes Metallsalz in einer Menge wenigstens gleich der stöchiometrischen Harzmenge, um die Harze auszufällen und auszuflocken, und

b) Alkali oder eine Säure, um einen pH-Wert von 5 bis 6 zu erhalten, zusetzt,

die resultierende Suspension, entwässert,

eine starke anorganische spaltende Säure, um einen pH von 2 oder weniger zu bekommen, zusetzt,

bei einer Temperatur von wenigstens 70°C spaltet, um Harz und gelöstes Metallsalz zu erhalten, und

das Harz von der das Metallsalz enthaltenden Lösung abtrennt.

2. Verfahren nach Anspruch 1, dadurch gekennzeichnet, daß auch ein Hilfsausflockungsmittel in der Form von organischem Polyelektrolyt zugesetzt wird.

3. Verfahren nach Anspruch 2, dadurch gekennzeichnet, daß man das Hilfsausflockungsmittel anschließend an die Zugabe a) der Metallsalzlösung und b) von Alkali oder Säure in dieser Reihenfolge zugibt.

4. Verfahren nach Anspruch 1, dadurch gekennzeichnet, daß man das ausgeflockte Harz von einem Trockenfeststoffgehalt von 5 bis 10% auf wenigstens 25% durch Entwässerung der Flocken in einer eindickenden Zentrifuge konzentriert.

5. Verfahren nach Anspruch 1, dadurch gekennzeichnet, daß die betreffenden Spaltungsprodukte jeweils für sich in einer spaltenden Zentrifuge bis zu einem Trockenfeststoffgehalt von 85% bezüglich des gespaltenen Harzproduktes isoliert werden, wobei die Trennung zwischen den betreffenden gespaltenen Produkten derart erfolgt, daß wenigstens 50% des eintretenden Me sich in der isolierten Lösung, die die abgespaltenen Metallsalze enthält befinden.

6. Verfahren nach den Ansprüchen 1 bis 5, dadurch gekennzeichnet, daß das verwendete flockenbildende Metallsalz Aluminiumsulfat ist und daß die spaltende Säure Schwefelsäure ist.

7. Verfahren nach den Ansprüchen 1 bis 5, dadurch gekennzeichnet, daß das flockenbildende Metallsalz ein Eisensalz, wie Ferrichlorid, Ferrisulfat oder Ferrichloridsulfat, ist und daß die spaltende Säure Schwefelsäure und/oder Salzsäure ist.

8. Verfahren nach den Ansprüchen 1 bis 5, dadurch gekennzeichnet, daß das flockenbildende Metallsalz Aluminiumchlorid ist und daß die spaltende Säure Salzsäure ist.

**Revendications**

1. Procédé de séparation des résines au départ d'une liqueur de traitement de pâte à papier, comprenant:

l'addition, à la liqueur, et;

(a) un sel métallique formant flocons en une quantité au moins égale à la quantité stoechiométrique de résine, pour précipiter et floculer les résines, et

(b) un alcali ou un acide pour arriver à un pH de 5—6,

la séparation de l'eau à partir de la suspension résultante,

l'addition d'un acide de subdivision inorganique fort pour obtenir un pH de 2 ou moins,

la subdivision à une température d'au moins 70°C pour obtenir une résine et un sel métallique dissous,

la séparation de la résine à partir de la solution contenant le sel métallique.

2. Procédé suivant la revendication 1, caractérisé en ce qu'on utilise également un agent floculant auxiliaire sous forme d'un polyélectrolyte organique.

3. Procédé suivant la revendication 2, caractérisé en ce qu'on ajoute l'agent de floculation auxiliaire après l'addition (a) de la solution de sol métallique, et (b) d'un alcali ou d'un acide, dans cet ordre.

4. Procédé suivant la revendication 1, caractérisé par la concentration de la résine floculée depuis une teneur en matières solides sèches de 5—10% jusqu'à environ 25%, par séparation de l'eau des flocons dans une centrifugeuse d'épaississement.

5. Procédé suivant la revendication 1, caractérisé en ce que les produits respectifs de la subdivision sont chacun isolés en soi dans une centrifugeuse de subdivision jusqu'à une teneur en matières solides sèches de 85% en ce qui concerne le produit résineux subdivisé, la séparation entre les produits subdivisés respectifs étant réalisée de manière qu'au moins 50% du Me entrant se retrouvent dans la solution isolée contenant les sels métalliques subdivisés.

6. Procédé suivant l'une quelconque des revendications 1 à 5, caractérisé en ce que le sel métallique formant flocons que l'on utilise est le sulfate d'aluminium, et en ce que l'acide de subdivision est l'acide sulfurique.

7. Procédé suivant l'une quelconque des revendications 1 à 5, caracérisé en ce que le sel métallique formant flocons est un sel de fer, tel que du chlorure ferrique, du sulfate ferrique, du chlorure-sulfate ferrique, et en ce que l'acide de subdivision est l'acide sulfurique et/ou l'acide chlorhydrique.

8. Procédé suivant l'une quelconque des revendications 1 à 5, caractérisé en ce que le sel métallique formant flocons est le chlorure d'aluminium, et en ce que l'acide de subdivision est l'acide chlorhydrique.

FIG 1

FIG 2

2

FIG 3